# EUROPEAN PATENT APPLICATION

(11) **EP 3 076 162 A1**
(43) Date of publication of application: **05.10.2016**
(21) Application number: 16156999.1
(22) Date of filing: 23.02.2016
(51) Int. Cl.: G01N 21/84, G01B 11/24, G01N 21/88, G01N 21/89

(54) **AN AUTOMATIC CONTROL MACHINE**

(30) Priority: 30.03.2015 IT MO20150073
(71) Applicant: Ferrari, Paola, 41049 Sassuolo MO (IT)
(72) Inventor: Ferrari, Paola, 41049 Sassuolo MO (IT)
(74) Representative: Gagliardelli, Fabrizio

(57) **Abstract**

A control machine (1) for flat articles (2), such as ceramic tiles or slabs, comprises: a control section (10) provided with optical means (11, 12, 14) for the geometric control and/or flatness control of flat articles (2); and conveyor means (3, 4, 5, 6) for conveying the articles (2) into the control section (10), which conveyor means (3, 4, 5, 6) comprises a transparent or translucent conveyor belt (3), suitable to support and move the flat articles (2).

## Description

The present invention has for object an automatic control machine, especially intended to be used in the ceramic industry.

In detail, the invention relates to a control machine which can be used, by way of a non-limiting example for sorting or control process operations.

In particular, the invention relates to an automatic machine to operate the so-called "control" of ceramic flat articles, such as ceramic tiles or slabs. Even more in detail, the invention relates to a machine predisposed to operate on the tiles at least a geometric control (or "linear measurement") as well as a flatness control.

There are known machines which are suitable to perform a sorting function based on which ceramic tiles or slabs are sorted out or discarded.

In detail, the sorting machines may be located upstream of end stations, wherein the tested articles are separated, thereby forming homogeneous groups or, as is usually said, they may belong to the same "selection group".

There are further known automatic control machines which are able to perform both a dimensional/geometrical control as well as an aesthetic control, in the sense of providing to perform checkings on tone and defects of articles.

The control machines comprise a cabin, wherein the optical control devices are located and a conveyor which passes through the cabin and essentially consists of two parallel belts driven by respective motors. The two belts support the articles and convey them continuously within the cab, wherein they are tested and thereafter conveyed towards the end of line, downstream of the machine.

In detail, a diffusion backlight is provided at the inspection area of the tiles, below the cabin, which diffusion backlight cooperates with the above optical control devices, which optical control devices include, for example, a camera and a laser projector.

The two belts are movable horizontally such that the reciprocal distance may be adjusted based on the different sizes of the articles to be tested. Although the known machine has proven to be able to function effectively, the same is not entirely free of drawbacks, especially when used to perform control of very long and slim tiles, which are having a great commercial deployment in the last time.

A first drawback is due to the fact that, because of the presence of the two belts, linear measurement operations on the tiles tested may become complicate and be partially distorted.

In fact, when the tile enters the cab and passes over the backlight, the presence of which is required to provide a contrast light that highlights the peripheral edges of the tile, the camera captures a series of images in which there are present dark bands produced by the belts. In detail, pairs of dark bands are present in the images acquired at two opposite edges of the tile.

Thus, the known machines do not allow to easily and accurately perform linear measurements at the edges of the tiles tested.

A further drawback relates to the control of the tiles flatness
This control is aimed at checking flatness of the tested tile following laying thereof on floors or coverings.

The tiles, especially with reference to slim and long sized tiles as mentioned, tend to bend due to gravity, when freely resting on the conveyor belts.

This circumstance constitutes a factor which distorts the flatness measurements performed by conventional machines.

Furthermore, the known conveyor system requires the perfect parallelism of the two belts, in that, even mild convergences or divergences have the effect of producing a rotation of the tiles during transport, which affects the reliability of the measurements performed by the machine.

The perfect parallelism of the belts is very complex to achieve, and above all, to maintain.

Indeed, on the one hand, achievement of parallelism requires complex installation and adjustment operations and, on the other, once obtained, the parallelism is rapidly lost due to the stresses the belts are subjected to during use and, due to the repeated movements away and towards, referred to above.

These drawbacks are exacerbated by the fact that the two belts may be activated independently from one another, since each of them is driven by a respective motor.

Therefore, in the absence of a perfect synchronization of the two motors, which is complicated to achieve and difficult to maintain, it takes place a rotation or a slipping of the tile which is being conveyed on the belts resulting in inaccuracies of the measurements performed.

In this context, the technical task at the base of the present invention is to provide a control machine which overcomes the drawbacks of the known art mentioned above.

The specified technical task is achieved by the control machine realized in accordance with claim 1.

Further characteristics and advantages of the present invention will become more apparent from the indicative, and therefore non-limiting description of a preferred but non-exclusive embodiment of the control machine illustrated in the appended figures wherein:
- Figure 1 is a side view, in vertical section, of the machine according to the invention;
- Figure 2 is a schematic top view of the machine of Figure 1; and
- Figure 3 is a schematic side view of the central part of the machine, taken in vertical section.

With reference to the attached figures, by 1 it is indicated a control machine for flat articles according to the invention.

The machine 1 herein provided is especially devised for use in the ceramic industry, and then mainly for the performing control operations on ceramic tiles or slabs.

In particular, the proposed machine 1 can be used for process control, upstream of the firing step of ceramic articles, or to perform the so-called "control", downstream of the firing step.

When used for the control, upstream of the firing step, the invention may be used for performing a contextual control or a control immediately after decoration.

In the preferred embodiment, illustrated in the accompanying drawings and described hereinafter, the invention concerns a machine 1 which is predisposed to perform automatically control operations as described above in the discussion on the prior art.

In detail, the machine 1 of the invention includes a control section 10 provided with optical control means 11, 12, 14 arranged to perform measurements at least of the geometric type ("linear measurement") and flatness measurements on flat articles 2.

For the sake of descriptive simplicity and without loss of generality, reference will be made hereinafter to the exemplary case in which the flat articles tested are tiles 2.

The optical control means may comprise one or more cameras 11 and a laser projector 12.

In detail, a camera 11 is provided to perform linear measurement operations on the tiles 2; the same camera 11, in functional cooperation with the laser projector 12, may also perform checking of the flatness. Furthermore, the invention may include a further camera (not shown in the attached figures), adapted to perform controls of the aesthetic type on the tiles 2.

A cabin can be mounted at the machine's control section 1, which cabin houses internally the camera 11 (or cameras), and the laser projector. Therefore, inside the cabin of the machine, there are performed control operations on the tiles 2.

In detail, the cabin 13 may also house an electronic processing unit that manages the optical control means 11, 12, 14 and is configured to process the acquired images for the purpose of selection operations.

Outside the cab 13 a control panel may be disposed which includes the control interface for the operators.

The machine 1 includes conveyor means 3, 4, 5, 6 for continuously conveying the tiles 2 to be tested in the control section 10 (i.e. inside the cabin 13) and subsequently in the output U to the machine 1. According to an important aspect of the invention, the conveyor means comprises a transparent or translucent conveyor belt 3, suitable to support and move the tiles 2.

In particular, the proposed machine 1 comprises a belt 3 which defines a continuous conveyor belt, whereon the tiles 2 to be tested are laid, one after the other.

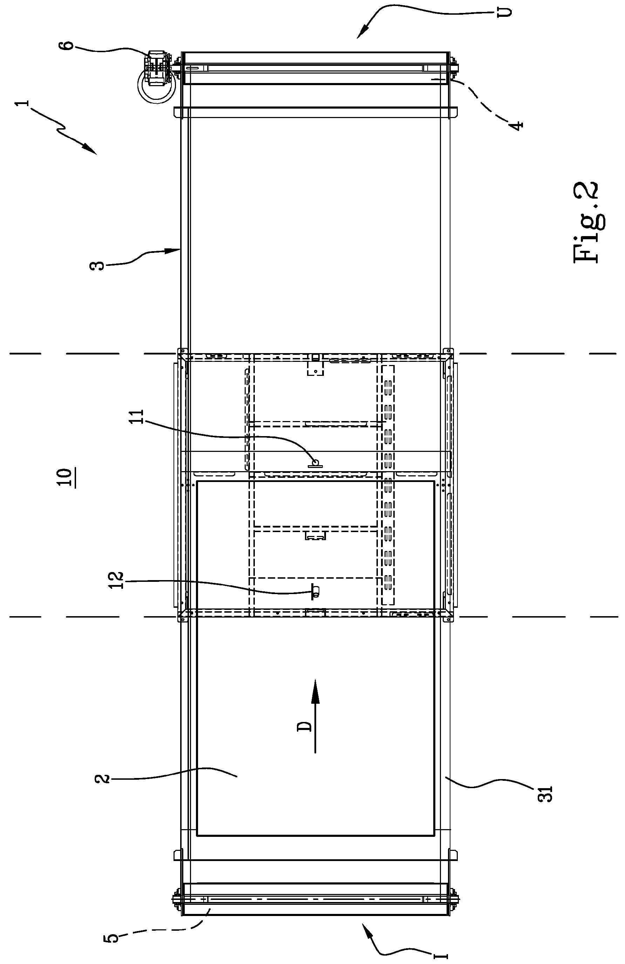

In practice, as shown in Figure 2, the belt 3 drags forward the tiles 2 along a direction D parallel to that of the longitudinal development of the machine 1.

Even more in detail, the invention preferably comprises a transparent or translucent single belt conveyor 3, which is capable of conveying alone the tiles 2.

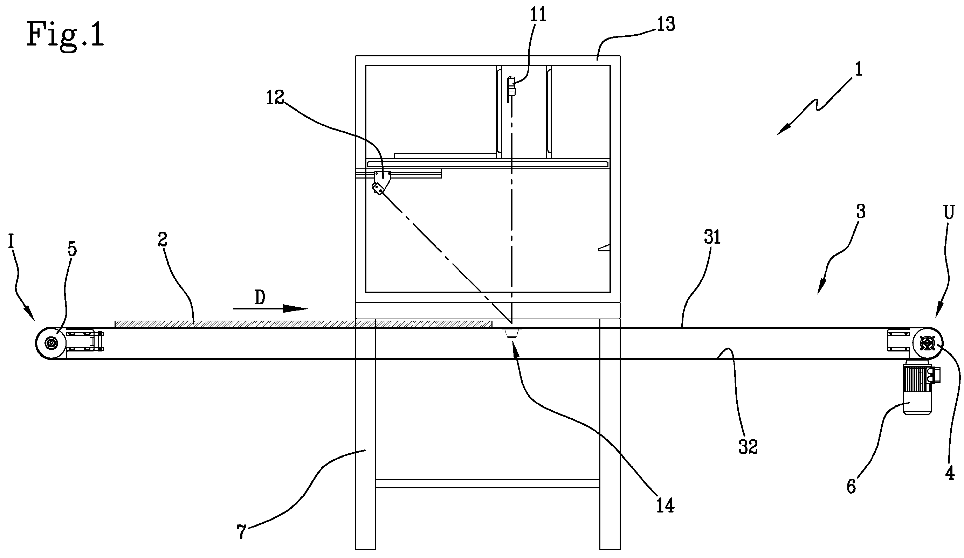

As shown in Figure 1, the conveyor means may comprise two opposite pulley means 4, 5, respectively arranged at the input I and output U of the machine 1.

These pulley means are for example constituted by respective rollers 4, 5 or similar rotatable elements.

The conveyor belt 3 of the invention, is closed in a loop around the two pulley means 4, 5 already mentioned, thereby defining two parallel and horizontal planes 31, 32.

The upper surface 31 of the belt 3 is that along which the tiles 2 are sliding.

This upper surface 31 crosses the aforesaid control section 10, by entering and exiting the cab 13 through appropriate openings.

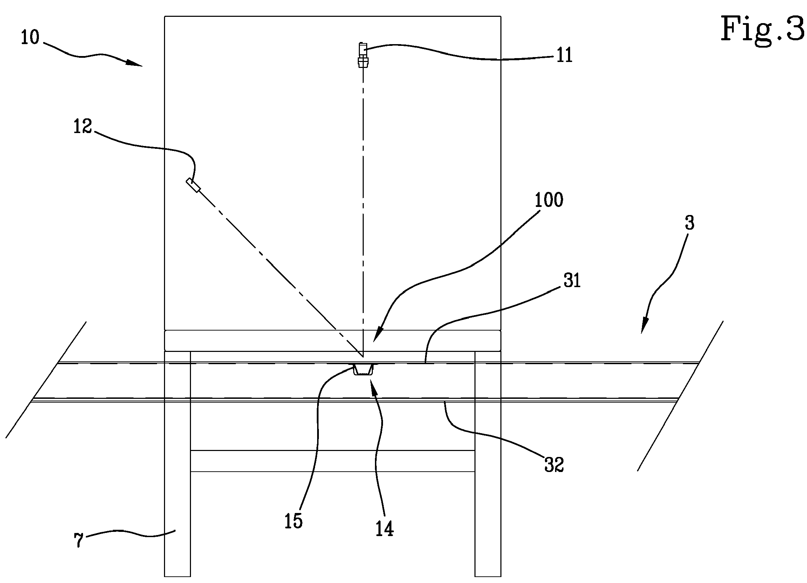

In particular, the above optical control means 11, 12, 14 are placed above the conveyor belt 3 and are oriented so as to point towards said upper conveyor surface 31 and, consequently, towards the tiles 2 conveyed by it. Even more in detail, the invention includes an illuminating device 14, located in the control section 10 and below the upper surface 31 of the belt 3 (see Figures 1 and 3).

Such illuminating device 14 constitutes the particular type of backlight the invention is provided with.

In practice, the upper surface 31 of the belt 3 is running in interposition between the illuminating device 14 and other optical devices, i.e. the camera 11 and the laser projector.

The illuminating device 14 may comprise a plurality of light emitting diodes (LED), preferably arranged in a row transverse to the length of the belt 3, that is, transverse to the direction of advancement D of the tiles 2.

Since the belt 3 is transparent or translucent, the light emitted from the illuminating device 14 passes through the thickness of the belt 3 and can then be recorded by the camera 11.

Therefore, the invention has been devised in order to allow an efficient backlight, while making available a continuous conveyor belt 3 only, instead of a plurality of belts as in the prior art.

The area of the control section 10 which is thus backlit, defines an inspection area 100 of the machine 1, towards which the camera 11 (or cameras), and the laser projector 12 (see Figure 3) are pointing. Therefore, the operations of linear measurement and flatness are carried out on the tiles 2 as the tiles are passing through the inspection area 100. In the case where the belt 3 is not transparent but translucent, the illuminating device 14 of the invention may avoid use of a diffuser means, because the belt 3 itself is able to diffuse the light which is crossing it. Preferably, the illuminating device 14 comprises a transparent rigid plate 15, for example made of glass, which superiorly closes the internal chamber that houses the light sources (e.g. LEDs).

In this case, the transparent plate 15 is placed in contact with the upper surface 31 of the belt 3, thereby acting as a support for the tiles 2 that are crossing the inspection area 100 illuminated.

In practice, in the frames captured by the camera 11, while the tiles 2 are crossing the inspection area 100, no dark band appears, since the support of the tiles 2 is constituted by a non-opaque continuous belt 3. Therefore, the linear measurements performed on the edges of the tiles 2 benefit of the contrast produced by the backlight, for their entire length, without interruptions due to the presence of opaque elements as instead happens in the known art.

The machine 1 of the invention is therefore able to acquire, through its camera 11, successions of frames in which the movement of the edges can be appreciated distinctly along the entire perimeter of the tile 2.

As mentioned above, the conveyor means comprises two guide rollers 4, 5, rotatable about the axes which are parallel to one another and horizontal, which guide rollers 4, 5 are placed in opposite positions along the longitudinal development of the machine 1.

One of these rollers 4, for example the one arranged at the output U, is set in rotation by a suitable motor 6, while the other roller 5 is preferably idler. Preferably, the invention comprises measurement means of the belt advancement, such as an encoder or similar device, connected to said processing unit.

In this case, the processing unit is configured to drive the optical control means 11, 12, 14, in accordance with the belt speed.

In particular, the acquisition of frames by the camera 11 is established in phase relation with the advancement of the belt 3 and thus of the tiles 2 which are being conveyed thereon. Preferably, the width of the belt 3 is equal to or greater than the maximum width of the tiles 2 to be inspected. In general, as mentioned above, the width of the conveyor belt 3 defines the maximum transverse dimensions of the conveyor means, at least in the portion comprised between the two pulley means 4, 5.

An alternative embodiment is however not to be excluded, wherein, albeit the belt 3 has a width less than that of the tiles 2 to be tested, this width is sufficient to allow conveyance of the tiles 2.

The advantages of the proposed invention are listed below.

The conveyor belt 3 of the machine 1, which extends to the whole width with respect to the conveying zone, supports the tiles 2 by coming in contact with the entire bottom surface, or in any case a preponderant portion thereof.

Thus, the tile 3 is resting on a continuous horizontal plane 31, which completely prevents or greatly limits the effects of gravity on the flatness of the tiles 2 conveyed, i.e., that kind of bending effect which, tends to distort flatness measurements in the prior art.

Therefore the machine 1 of the invention is able to make reliable flatness measurements even in relation to long and slim tiles of which it has been discussed in the introduction.

Additionally, the fact of providing a single conveyor belt 3 instead of the two belts of the prior art, allows to overcome all of the drawbacks due to use of a plurality of independent conveyor elements.

In particular, owing to the control machine 1 of the invention, the tiles 2 may translate without being subjected to any rotations which in the prior art were due to imperfect parallelism of the belts.

Similarly, given that the operation of the machine herein disclosed is based on a single motor 6 which drives the conveyor belt 3, the machine is not subject to any synchronization problems which instead affect the two motors associated with the two belts of the known machines.

Additionally, the fact that a single conveyor belt 3 was provided, makes it possible to avoid the complication of having to move forward or away the belts according to the different sizes of the tiles 2 to be tested.

Finally, the machine 1 of the invention of course includes a support base 7 consisting of a pallet or the like, and may include additional devices and components, with which control machines are usually provided.

It is therefore clear how the above described invention fully overcomes the drawbacks of the known art.

## Claims

1. A control machine (1) for flat articles (2), such as ceramic tiles or slabs comprising:
a control section (10) provided with optical means (11, 12, 14) for geometric control and/or flatness control (2) of flat articles; and
conveyor means (3, 4, 5, 6) for conveying the articles (2) within said control section (10);
**characterized in that** said conveyor means comprises a transparent or translucent conveyor belt (3), suitable for supporting and moving the flat articles (2).

2. A machine (1) according to the preceding claim, comprising a single conveyor belt (3) which is capable of conveying flat articles (2) by itself.

3. A machine (1) according to at least any preceding claim, wherein said optical means (11, 12, 14) comprises at least one camera (11) and at least one illuminator (14), the belt conveyor (3) being interposed between said camera (11) and said illuminator (14).

4. A machine (1) according to the preceding claim, wherein the illuminator (14) comprises a plurality of light emitting diodes.

5. A machine (1) according to claim 3 or 4, wherein the illuminator (14) comprises an upper rigid and transparent slab (15) placed in contact with the conveyor belt (3).

6. A machine (1) according to at least any preceding claim, wherein the width of the conveyor belt (3) defines the transversal dimensions of the convey means.

7. A machine (1) according to at least any preceding claim, wherein said transport means comprises two pulley means (4, 5), respectively disposed at the input (I) and output (U) of the machine (1) around which, said belt conveyor (3) is ring-closed.

8. A machine (1) according to claim 4 or 5, wherein said convey means comprises a motor (6) able to cause rotation of one of said pulley means (4, 5).

9. A machine (1) according to the preceding claim, comprising measurement means for measuring the advancement of the conveyor belt (3) and one processing unit connected to said measurement means, said processing unit being configured for controlling the optical means (11, 12, 14) according to the advancement measures performed.
